# EUROPEAN PATENT APPLICATION

(11) **EP 2 009 089 A1**
(43) Date of publication of application: **31.12.2008**
(21) Application number: 08011204.8
(22) Date of filing: 19.06.2008
(51) Int. Cl.: C12G 1/02, C12H 1/22

(54) **Fermentation system**

(30) Priority: 22.06.2007 ES 200701736
(71) Applicant: Inoxidables Alimentarias, S.L., 26150 Agoncillo La Rioja (ES)
(72) Inventor: Blanco Aguirre, David, 26150 Agoncillo La Rioja (ES); Blanco Fernandez, Julio, 26150 Agoncillo La Rioja (ES); Pérez de la Parte, Mercedes, 26150 Agoncillo La Rioja (ES); Sanz Adan, Félix, 26150 Agoncillo La Rioja (ES)
(74) Representative: Schäfer, Matthias W.

(57) **Abstract**

Fermentation and storage system, of the type used to produce wine, characterised in that it is implemented in a basic modular fermentation vat comprised of two tanks and/or in a multiple fermentation vat comprised of three or more tanks connected to each other by a coupling procedure and the subsequent assembly of accessory elements and built-in systems for connecting the different tanks together and connecting onto them.

The invention presented herein provides the advantages of transport, assembly and adaptability to the surroundings, guaranteeing speedier fermentation thanks to the decanting process originating between the different tanks.

## Description

Fermentation and storage system, of the type used to produce wine, characterised in that it is implemented in a basic modular fermentation vat comprised of two tanks and/or in a multiple fermentation vat comprised of three or more tanks connected to each other by a coupling procedure and the subsequent assembly of accessory elements and integrated systems for connecting the different tanks together and connecting onto them.

Tanks for storage and/or fermentation are currently manufactured in a single piece, of a considerable size and weight, in accordance with the volume to be processed. This leads to drawbacks both in their transportation and their subsequent handling and installation.

There are numerous known fermentation systems that use fermentation tanks or vats. For example Patent 2 181 035 discloses the use of a fermentation tank that aids the retention of the gas bubbles generated by fermentation in a diaphragm or deflector situated in the middle of the tank, which when released disturb the cap formed at the top of the tank, the disadvantage being that as the process is conducted in a single tank a significant amount of time may be wasted due to its prolongation.

In addition to the problems generated during transport and subsequent handling prior to definitive installation, there is also the drawback of the assembly of the diaphragm or deflector during the manufacturing process.

In order to solve the existing problems a fermentation and storage system that is the object of this invention has been designed, characterised in that it is implemented in a modular fermentation vat comprised of two or more tanks, although in order to aid its description in this document we will refer to a preferred embodiment corresponding to a basic modular cylindrical fermentation vat, comprised of two tanks, and in a second embodiment, to a multiple modular fermentation vat, also cylindrical and comprised of three tanks, without excluding the possibility that the fermentation vat may be formed by connecting more than three tanks by means of inserting additional intermediate bodies.

As a result, the fact that it consists of different tanks manufactured separately and independently makes it easier to transport as its size is reduced considerably, making it lighter and easier to handle and thus ideal for both large and small facilities.

The fermentation and storage system involves the following phases: ***procedure for the assembly of a fermentation vat, the assembly of accessory elements and the fermentation process,*** these being comprised of different sections or phases to ensure they are fully understood and developed.

### Procedure for the assembly of a basic modular fermentation vat:

The lower tank is fixed, the bottom of the tank being supported on a base on the floor or on feet if these are built into it.
A lifting tool is then inserted into the upper tank through the upper opening in the roof so that it may be handled in complete safety by a crane or similar device, and at the same time stops are perimetrally disposed on the central duct, made up of sections of pipe that are short in length and disposed at an equal distance and attached by a spot weld.

The lifting tool consists of two rectangular supports welded in parallel to each other and separated by a short distance, and features an upper plate with a fastening shackle in the centre.

The hook of the lifting device is inserted into the shackle of the tool, the upper tank being vertically disposed on the lower one and the central duct being inserted into the lower tank until the stops come into contact with each other.

As a result the central duct is inserted into the lower tank at an exact distance depending on the total size of the modular fermentation vat. Both tanks are then fixed, by connecting them at that point of contact, the tool and the stops being removed.

The connection between both tanks is formed by clamps, although they may be connected permanently, if necessary, by means of welding.

The present fermentation and storage system is **characterised in that** the hook of the crane or similar device is inserted in the fastening shackle, the upper tank being disposed vertically and the central duct being inserted in the lower tank until the stops come into contact with each other, both tanks then being fixed, by connecting them at that point of contact by clamps, the tool and the stops being removed, or by connecting them permanently, if necessary, by means of welding.

### Procedure for the assembly of a multiple modular fermentation vat:

The aim is to repeat the same working procedure set out for the basic modular fermentation vat, the only difference being that the process includes more than two tanks.

In this particular case, once the lower tank has been fixed to the floor, one or more intermediate tanks may be placed on top of it, the same process being observed until the completion of the assembly with the coupling of the upper tank, the fixing of the modular fermentation vat being completed by clamps or permanently by means of welding.

### Assembly of accessory elements on a basic modular fermentation vat

Once the fermentation vat has been erected the corresponding valves, probes, etc are fitted so that the fermentation and storage system may be implemented through the following phases: ***initial assembly, upper tank and lower tank.***

### Initial assembly:

Firstly the tanks are connected to the central ducts by coupling the pneumatic valves fitted on the corresponding sleeves disposed on them. These valves are designed to accumulate and then release carbonic gas during the fermentation process.

### Upper tank:

The following elements and systems are respectively assembled on and integrated in the upper tank: ***double-action valve, temperature control system and coupling of the temperature control system to the central duct.***

### Double-action valve:

The upper tank is provided with a central opening with a hermetic seal cover that prevents direct contact between the grapes and the must and the oxygen in the surrounding atmosphere, thereby preventing the phenomenon of oxidation. It may be opened to enable the visual inspection and control of the fermentation process, and it may also be used to manually introduce additional elements that the winemaker considers necessary at any specific point of the process.

A double-action pressure/vacuum valve may be inserted alongside the central opening, it being threaded on a sleeve located on the upper tank in order to control oxygenation.

This double-action valve has a spring built into it so that when the upper cover is closed it prevents air from passing to the interior of the fermentation vat, although it does enable filling and emptying operations to be performed without the need to act directly on the cover, which may remain closed.

When the fermentation vat is emptied the spring is compressed to let air pass in a controlled manner, thereby preventing the formation of a vacuum inside the fermentation vat, which may bring the process to a halt.

Inversely, during filling operations the spring expands to allow gases to escape from the inside and thus prevent overpressure.

It may be deduced, therefore, that the double-action valve enables the control of the concentration of carbonic gas generated naturally and spontaneously during the grape fermentation process and of the amount of oxygen allowed to enter, thus allowing controlled aerobic/anaerobic fermentation.

### Temperature control system:

This consists of a closed air-conditioning circuit and temperature probes, controlled from an electrical control panel with a programmable digital thermostat, connected to the probe fitted in the upper tank, which records the temperature and the electric valves of the closed air-conditioning circuit.

### Closed air-conditioning circuit:

Air-conditioning is provided by the coil that may form part of the body of the upper tank, and involves the connection of electric valves connected to the inlet and the outlet of the coil, thereby enabling the passage of a fluid that is usually hot or cold water depending on the requirements that may arise during the process.

### Temperature probe:

This element consists of a metal casing with a thread attached to a head with electrical connections connected directly to a sleeve disposed on the body of the upper tank.

The probe is threaded onto the sleeve, the casing thus facing the internal part and the head being in the external part. The casing records the temperature and the head sends the electrical signal to the electrical control panel, where it is recorded.

### Operating method:

This involves programming the required temperature in the thermostat of the electrical control panel. If the temperature recorded by the temperature probe does not coincide with the programmed temperature, a signal is sent from the electrical control panel to the electric valves so that they may open and allow fluid to pass through.
When the temperature recorded by the temperature probe is the same as that programmed on the electrical control panel, the electric valves close. This process is repeated cyclically throughout the fermentation process, enabling absolute control of the internal temperature of the modular fermentation vat.

### Coupling of the temperature control system to the central duct:

The central duct may be disposed with a temperature control system similar to the one described for the body of the upper tank through the coil that may form part of it, by means of the connection of electric valves to the inlet and outlet of the coil, thereby enabling the passage of a fluid that is usually hot or cold water depending on the requirements that may arise during the process.

The connection to the closed air-conditioning circuit is formed by two pipes that run out to the exterior through the body of the lower tank. This is especially recommended in fermentation vats of a larger diameter, as there is a thermal difference between the exterior walls (in contact with the atmosphere) and the centre in the interior.

The coupling of the closed air-conditioning circuit to the central duct allows both temperatures to be homogenised, which is recommended to create uniform fermentation, with the main duct having the following functions:

**A:** to act as an stabilising element during and after the assembly of the two tanks (upper + lower). To achieve this the dimensions of this central duct depend on the total volume of the modular fermentation vat as these dimensions are crucial to this first function being carried out correctly.
**B:** to channel the oenological gases and products present inside the fermentation vat so that they may distributed effectively around it.
**C:** to homogenise the temperature using a closed air-conditioning circuit. It should be pointed out that the central duct forms part of the upper tank and is permanently attached to the bottom of it.

### Lower tank:

The following elements and systems are respectively assembled on and integrated in the lower tank: ***the opening and closing valve and the temperature control system.***

### Opening and closing valve:

This is coupled to a sleeve disposed at the bottom of the lower tank so that the modular fermentation vat may be filled and emptied.

### Temperature control system:

This consists of a closed air-conditioning circuit and temperature probe, controlled from an electrical control panel with a programmable digital thermostat, connected to the probe fitted in the upper tank, which records the temperature and the electric valves of the closed air-conditioning circuit.

### Closed air-conditioning circuit:

Air-conditioning is provided by the coil that may form part of the body of the lower tank, and involves the connection of electric valves connected to the inlet and the outlet of the coil, thereby enabling the passage of a fluid that is usually hot or cold water depending on the requirements that may arise during the process.

### Assembly of accessory elements on a multiple modular fermentation vat

Once the fermentation vat has been erected the corresponding valves, probes, etc are fitted so that the fermentation and storage system may be implemented through the following phases: ***initial assembly, upper tank, intermediate tank and lower tank.***

### Intermediate tank:

The multiple fermentation vat may comprise one or more intermediate tanks situated between the upper and the lower tank, the following elements and systems being respectively assembled on and integrated in them: ***temperature control system and coupling of the temperature control system to the central duct.***

### Temperature control system:

This consists of a closed air-conditioning circuit and temperature probe, controlled from an electrical control panel with a programmable digital thermostat, connected to the probe fitted in the upper tank, which records the temperature and the electric valves of the closed air-conditioning circuit.

***Closed air-conditioning circuit:*** air-conditioning is provided by the coil that may form part of the body of the intermediate tank, by means of the connection of electric valves to the inlet and outlet of the coil, thereby enabling the passage of a fluid that is usually hot or cold water depending on the requirements that may arise during the process.

Once the assembly of the fermentation vats featuring the various accessory elements and systems that make them up has been completed the fermentation process may begin.

### Fermentation:

The grapes are deposited into the fermentation vats, which subsequently convert them into wine as a result of the following processes: ***filling, fermentation, decanting and emptying.***

### -Filling

The modular fermentation vat may be filled from the opening in the roof of the upper tank or through the valve integrated in the bottom of the lower tank.

Any filling operations conducted through the opening in the roof of the upper tank involve gravity as the grapes fall freely into the fermentation vat.
Filling operations conducted through the valve integrated in the bottom of the lower tank require the use of a pressure pump, given that as the modular fermentation vat is filled the grapes already inside the tank must be forced out of the way to enable the new grapes to be deposited.

During this process, due to the weight of grapes on top of each other, the grapes release their juice so that in the end, and once the filling operation has been completed, two thirds of the total volume of the fermentation vat is taken up with liquid and one third with grape skins, pulp and seeds.
During this filling operation the pneumatic valves that connect the central duct and the roof of the lower tank remain closed.
As a consequence, the air that has accumulated between the lower part of the central duct and the roof of the lower tank cannot be moved, with this entire space remaining full of air but not liquid.

### -Fermentation

Once the modular fermentation vat is full fermentation begins due to the action of the bacteria that convert the sugar in the grapes and liquid solution into alcohol.

In this phase yeasts are usually added on a regular basis by the winery's technical staff in order to aid the bacterial action.
Due to the bacterial action, the fermentation of the solution produces carbonic gas naturally, spontaneously and continuously throughout the whole process until its completion.

Said carbonic gas rises from the lower tank to the upper tank through the central duct, pushing the grape skins upwards so that they accumulate in the upper tank, floating on top of the liquid.

As the roof of the upper tank comprises an opening with a cover and a double-action valve, in accordance with the descriptions provided above, this enables the gas to accumulate in the amount necessary without causing excess pressure inside the modular fermentation vat and control the oxygenation of the process to prevent the oxidation of the skins and the liquid contained in the fermentation vat.

The present fermentation and storage system is characterised in that during the fermentation phase the carbonic gas accumulates at the roof of the upper tank in the amount necessary without causing excess pressure inside the modular fermentation vat thanks to the intervention of a double-action valve that may control the oxygenation of the process and prevent the oxidation of the skins and the liquid.

However, part of this gas is trapped between the walls of the central duct, the roof and the body of the lower tank, as the valves connecting the roof of the lower tank and the central duct are closed. As a result, gas accumulates in this area and displaces the oxygen.

When the carbonic gas in said area reaches a certain pressure, it starts to escape through the central duct towards the upper tank bombarding the grape skins and pulp floating in it.

### -Decanting

From this point the valves connecting the roof of the lower tank to the central duct may be opened, thereby releasing all the accumulated gas towards the upper tank through the aforementioned central duct.

This action creates a vacuum in the area where the gas accumulated, which is automatically occupied by the liquid, thereby causing the precipitation of the skins present in the upper tank to the lower tank through the central duct.

The valves are then closed and the process of accumulation of the gas is repeated. As the liquid cannot compress the gas it displaces it downwards until it is level with the lower part of the central duct. The skins thus return to the upper tank and the cycle is repeated until the fermentation phase ends.

The advantage of these successive decanting phases is that they remove the oenological characteristics present in the skins, making use of the energy of the accumulated gas in an effective and simple way.

The seeds contained in the grapes come away during decanting and fall to the bottom of the lower tank. If necessary, they may be removed through the valve at the bottom of the tank.

### - Decanting in a multiple modular fermentation vat

While it has the same uses and characteristics as the basic modular fermentation vat, it does have the specific feature of being comprised of more than two tanks and thus having a minimum of two central ducts, as a result of which when the pneumatic valves are closed the amount of carbonic gas trapped between them, the body and the roof of the tanks is greater as, instead of accumulating carbonic gas in a specific area, it is created in at least two different areas, thus accelerating the decanting phase considerably.

The present fermentation and storage system is **characterised in that** in the decanting phase pneumatic valves are closed and the process of the accumulation of carbonic gas is repeated. As the liquid cannot compress the carbonic gas it moves it downwards until it is level with the lower part of the central duct, with the skins thus returning to the upper tank and the cycle being repeated until the fermentation phase ends.

This is especially advantageous for large fermentation vats in that if they consisted of only two tanks, the fermentation process would take longer.

This fermentation and storage system is **characterised in that** repeated decanting during this phase has the advantage of removing the oenological characteristics present in the skins, making use of the energy of the accumulated gas in an effective and simple way, with the seeds contained in the grapes coming away during decanting and falling to the bottom of the lower tank, these being removed through the opening/closing valve at the bottom of the tank if necessary.

### -Emptying

Once fermentation has been completed the valve at the bottom of the lower tank is opened to empty all the liquid and the skins present inside the modular fermentation vat.

### Storing wine:

It is also possible to store wine inside the modular fermentation vat. This simply involves opening the valves that connect the roof of the lower tank to the central duct so that the accumulation of air described in the fermentation phase does not occur, which thus enables the liquid to flood both the lower tank and the upper one completely.

The fermentation and storage system presented herein provides numerous advantages in relation to existing systems, the most important of them being that the modular construction of the fermentation vats in which the system is implemented guarantees at least two different uses such as fermenting and storing wine, thereby ensuring speedier fermentation thanks to the decanting process that occurs between the different tanks.

Another of the most notable advantages is that assembly may be carried out using cranes by means of an assembly procedure, and in facilities where there is limited space other conventional means may be used to assemble the tanks as they are lighter and smaller in size than those constructed in a single piece.

Another significant advantage is that as they consist of modules they are easier to transport and then assemble, as it is easier to handle them due to their smaller size and reduced weight.

Another significant advantage is that the system provides for the assembly of accessory elements and built-in systems for connecting the different tanks together and connecting onto them, thereby guaranteeing at least two different uses such as fermenting and storing wine.

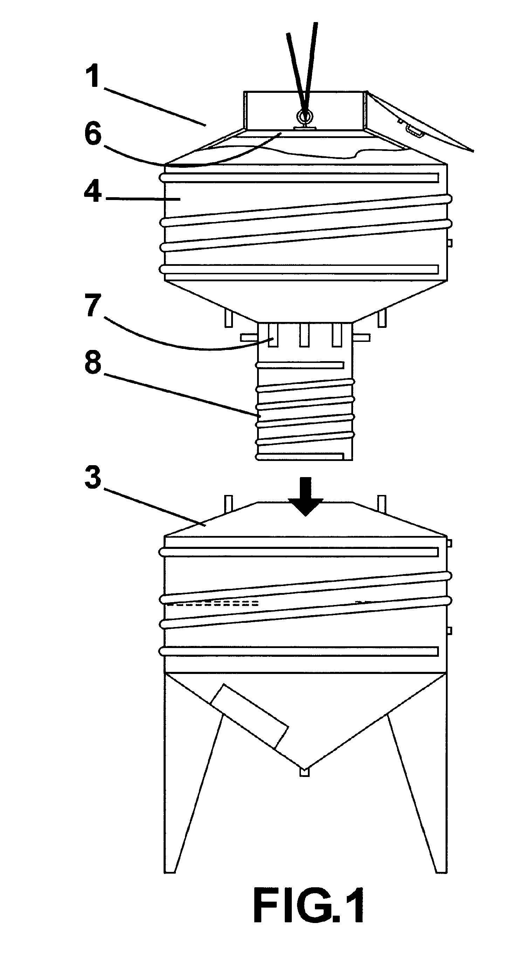

In order to better understand the object of the present invention, a preferred practical embodiment of said invention is shown in the plan attached.
In said plan Figure 1 shows an elevated view of the procedure for the assembly of a basic modular fermentation vat.

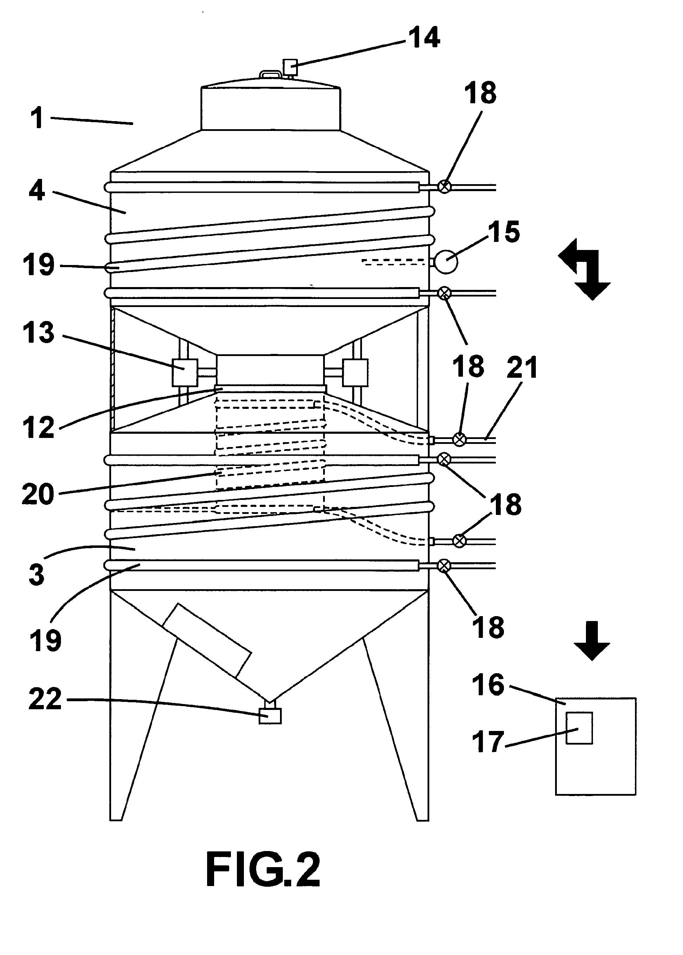

Figure 2 shows an elevated view of the complete assembly of a basic modular fermentation vat.

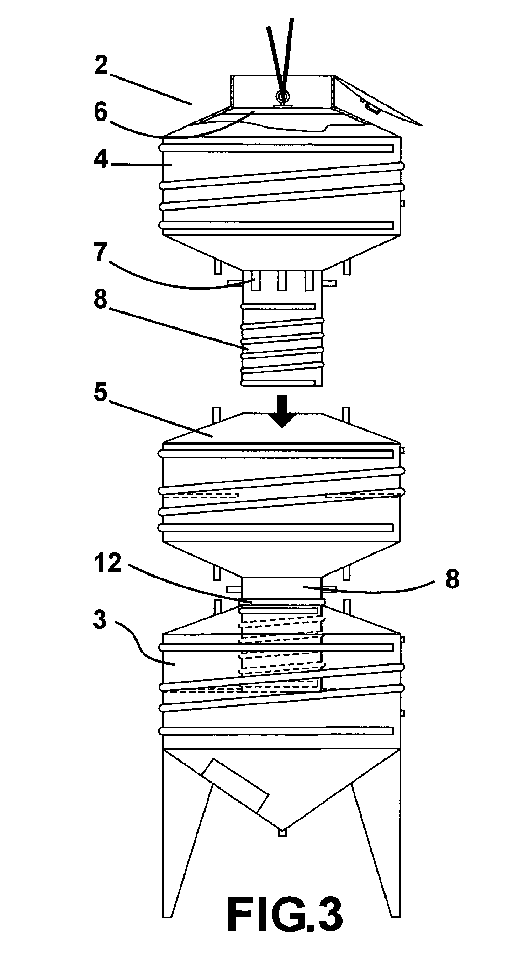

Figure 3 shows an elevated view of the procedure for the assembly of a multiple modular fermentation vat.

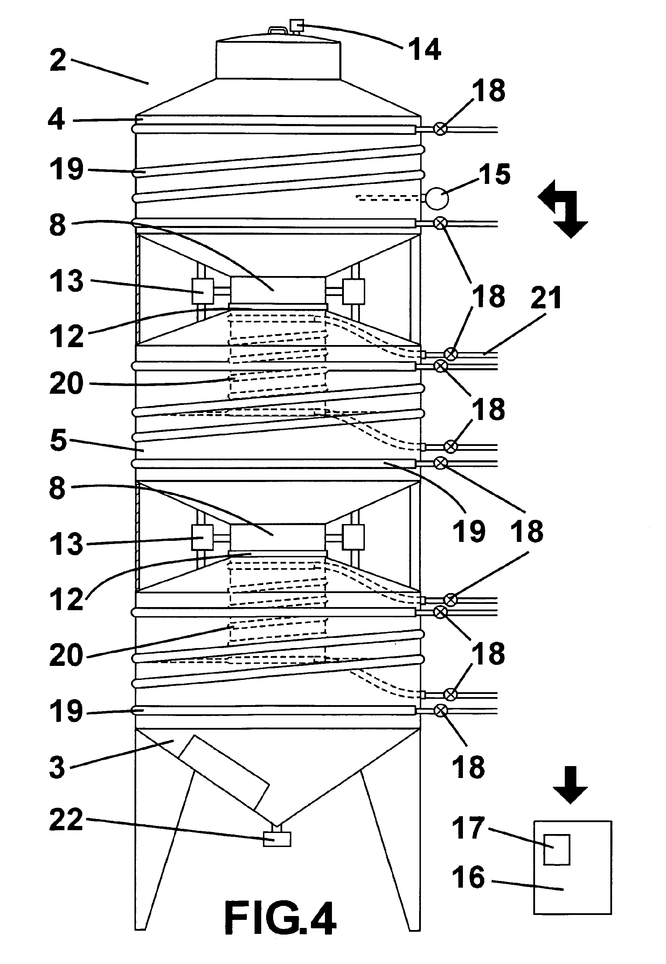

Figure 4 shows an elevated view of the complete assembly of a multiple modular fermentation vat.

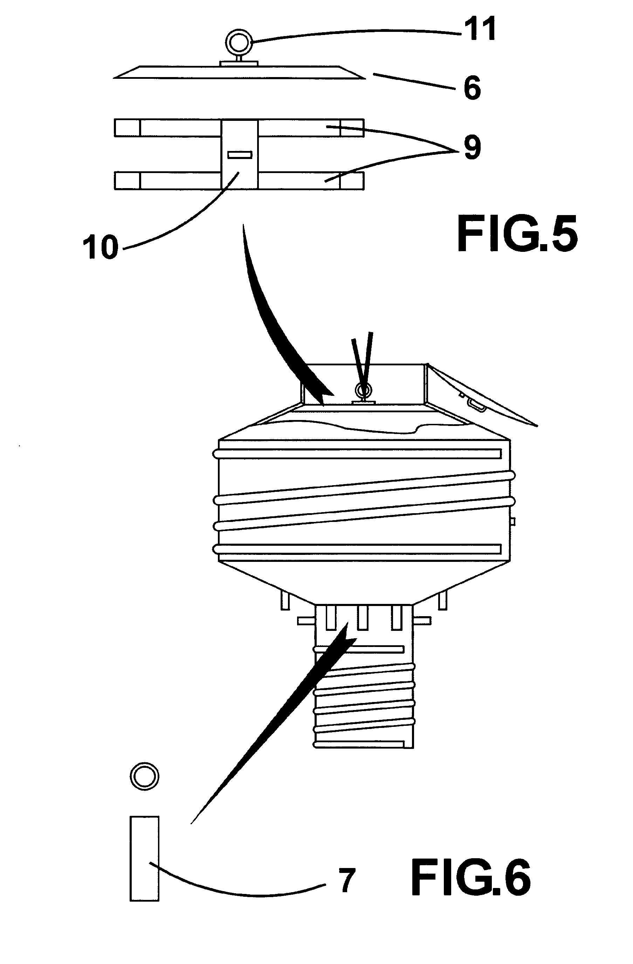

Figure 5 shows a ground and elevated view of the lifting tool.
Figure 6 shows a ground and elevated view of the stops, perimetrally disposed on the central duct of the upper and intermediate tanks.

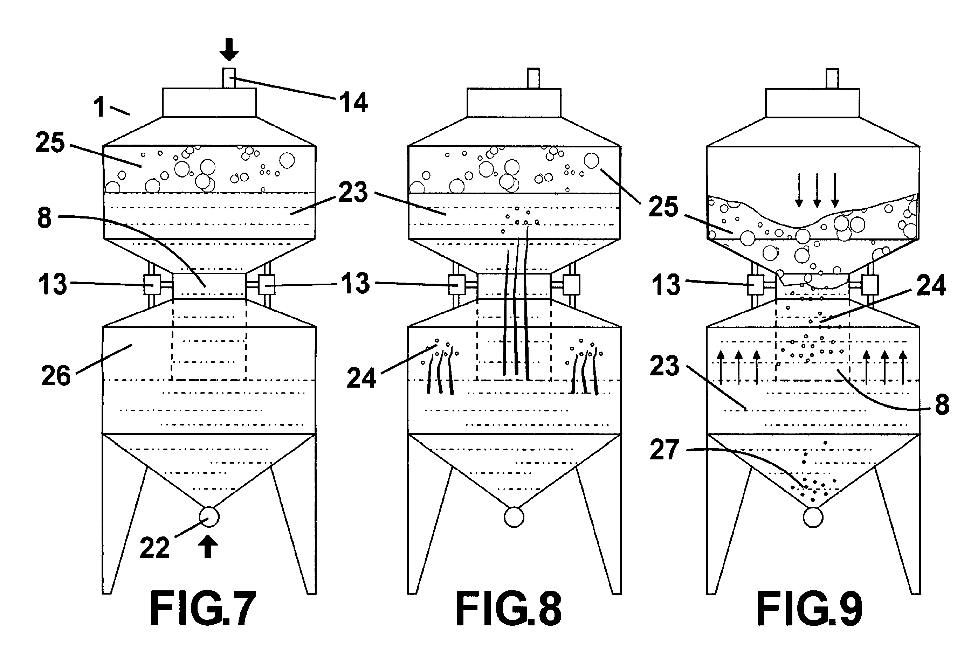

Figure 7 shows a schematic elevated view of a basic modular fermentation vat during the filling phase, with the pneumatic valves closed.
Figure 8 shows a schematic elevated view of a basic modular fermentation vat during the fermentation phase, with the pneumatic valves closed.
Figure 9 shows a schematic elevated view of a basic modular fermentation vat during the decanting phase, with the pneumatic valves open.

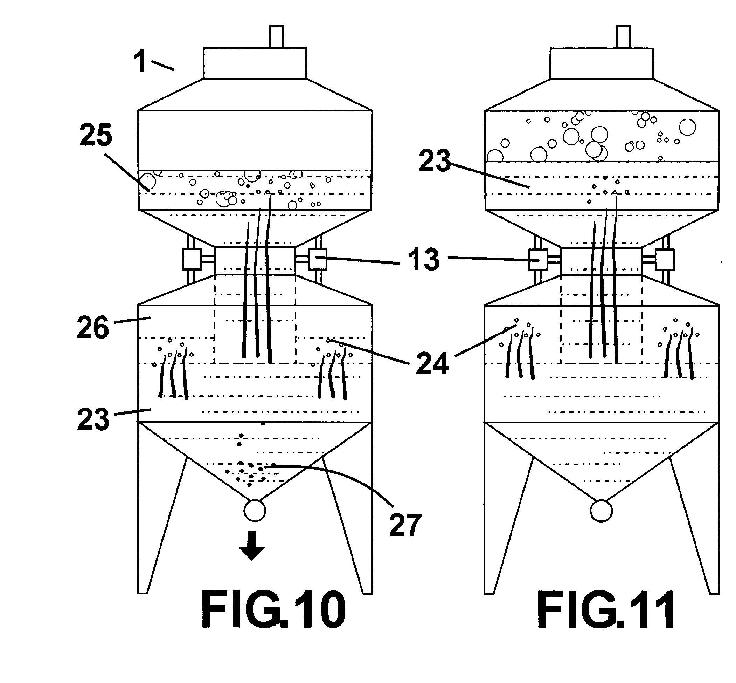

Figure 10 shows a schematic elevated view of a basic modular fermentation vat during the start of the fermentation cycle phase, with the pneumatic valves closed.
Figure 11 shows a schematic elevated view of a basic modular fermentation vat during the fermentation phase, ready for the following decanting cycle, with the pneumatic valves closed.

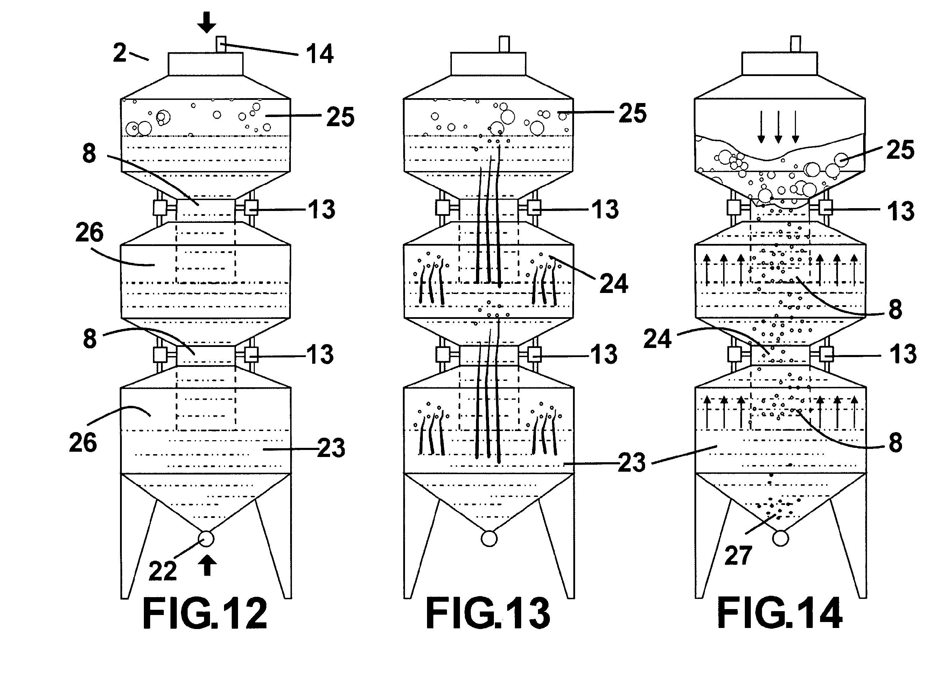

Figure 12 shows a schematic elevated view of a multiple modular fermentation vat during the filling phase, with the pneumatic valves closed.
Figure 13 shows a schematic elevated view of a multiple modular fermentation vat during the fermentation phase, with the pneumatic valves closed.
Figure 14 shows a schematic elevated view of a multiple modular fermentation vat during the decanting phase, with the pneumatic valves open.

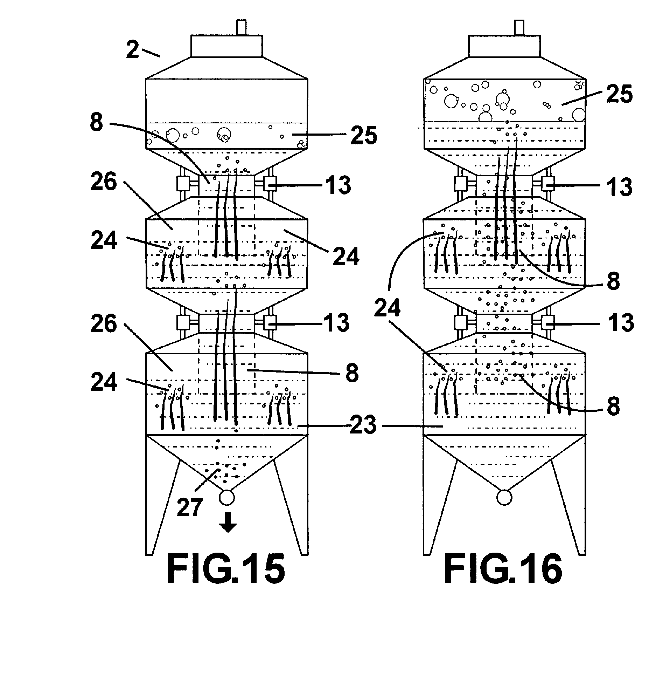

Figure 15 shows a schematic elevated view of a multiple modular fermentation vat during the start of the fermentation cycle phase, with the pneumatic valves closed.
Figure 16 shows a schematic elevated view of a multiple modular fermentation vat during the fermentation phase, ready for the following decanting cycle, with the pneumatic valves closed.

The fermentation and storage system that is the object of this invention may be implemented in a basic modular fermentation vat (1) and/or in a multiple modular fermentation vat (2), with the following assembly procedure being applied.

### Procedure for the assembly of a basic modular fermentation vat:

The lower tank (3) is fixed, the bottom of the tank being supported on a base on the floor or on feet if these are built into it.

A lifting tool (6) is then inserted into the upper tank (4) through the upper opening in the roof, and at the same time stops (7) are perimetrally disposed on the central duct (8) of the upper tank (4), made up of sections of pipe that are short in length and disposed at an equal distance and attached by a spot weld.

The lifting tool consists of two rectangular supports welded in parallel to each other and separated by a short distance, and features an upper plate (10) with a fastening shackle (11) in the centre.

The hook of the lifting device is inserted into the fastening shackle (11), the upper tank (4) being vertically disposed and the central duct (8) being inserted into the lower tank (3) until the stops (7) come into contact with each other.

Both tanks are then fixed, by connecting them at that point of contact by means of clamps (12) or by a permanent connection by means of welding if required, the tool (6) and the stops (7) being removed.

### Procedure for the assembly of a multiple modular fermentation vat:

The aim is to repeat the same working procedure set out for the basic modular fermentation vat (1), the only difference being that the process includes more than two tanks.
In this particular case, once the lower tank (3) has been fixed to the floor, one or more intermediate tanks (5) may be placed on top of it, the same process being observed.

### Assembly of accessory elements on a basic modular fermentation vat

Once the fermentation vat (1) has been erected the corresponding valves, probes, etc are fitted so that the fermentation and storage system may be implemented through the following phases: ***initial assembly, upper tank and lower tank.***

### Initial assembly:

Firstly the lower tank (3) and the upper tank (4) are connected to the central duct (8) by means of coupling the pneumatic valves (13) fitted on the corresponding sleeves disposed on them.

### Upper tank:

The following elements and systems are respectively assembled on and integrated in the upper tank (4): *double-action valve, temperature control system and coupling of the temperature control system to the central duct.*

### Double-action valve:

The upper tank is provided with a central opening with a hermetic seal cover that prevents direct contact between the grapes and the must and the oxygen in the surrounding atmosphere, thereby preventing the phenomenon of oxidation. It may be opened to enable the visual inspection and control of the fermentation process, and it may also be used to introduce manually additional elements during the process.

A double-action pressure/vacuum valve (14) may be inserted alongside the central opening, it being threaded on a sleeve located on the upper tank (3) in order to control oxygenation.

This double-action valve (14) prevents air from passing to the interior of the fermentation vat, although it does enable filling and emptying operations to be performed without the need to act directly on the cover, which may remain closed.

When the fermentation vat is emptied it allows air to pass in a controlled manner, thereby preventing the formation of a vacuum inside the fermentation vat, which may bring the process to a halt. Inversely, during filling operations, it allows gases to escape from the inside and thus prevents excess pressure from building up.

### Temperature control system:

This consists of a closed air-conditioning circuit and temperature probes (15), controlled from an electrical control panel (16) with a programmable digital thermostat (17), and connected to the probe (15) that records the temperature and the electric valves (18) of the closed air-conditioning circuit.

### Closed air-conditioning circuit:

Air-conditioning is provided by the coil (19) that may form part of the body of the upper tank (4), and involves the connection of electric valves (18) connected to the inlet and the outlet of the coil (15), thereby enabling the passage of a fluid that is usually hot or cold water depending on the requirements that may arise during the process.

### Temperature probe:

This element consists of a metal casing with a thread attached to a head with electrical connections connected directly to a sleeve disposed on the body of the upper tank (4). The probe is threaded onto the sleeve, the casing thus facing the internal part and the head being in the external part. The casing records the temperature and the head sends the electrical signal to the electrical control panel (16).

### Operating method:

This involves programming the required temperature in the thermostat (17) of the electrical control panel. If the temperature recorded by the temperature probe (15) does not coincide with the programmed temperature, a signal is sent from the electrical control panel (16) to the electric valves (18) so that they may open and allow fluid to pass through.

When the temperature recorded by the temperature probe (15) is the same as that programmed on the electrical control panel (16), the electric valves (18) close. This process is repeated cyclically throughout the fermentation process, enabling absolute control of the internal temperature of the modular fermentation vat.

### Coupling of the temperature control system to the central duct:

The central duct (8) may be disposed with a temperature control system similar to the one described for the body of the upper tank through the coil (20) that may form part of it, by means of the connection of electric valves (18) to the inlet and outlet of the coil (20), thereby enabling the passage of a fluid that is usually hot or cold water depending on the requirements that may arise during the process.

The connection to the closed air-conditioning circuit is formed by two pipes (21) that run out to the exterior through the body of the lower tank (3). This is especially recommended in fermentation vats of a larger diameter, as there is a thermal difference between the exterior walls (in contact with the atmosphere) and the centre in the interior.

The coupling of the closed air-conditioning circuit to the central duct (8) allows both temperatures to be homogenised, which is recommended to create uniform fermentation, with the main duct having the following functions:
**A:** to act as an stabilising element during and after the assembly of the two tanks (upper + lower). To achieve this, the dimensions of this central duct depend on the total volume of the modular fermentation vat as these dimensions are crucial to this first function being carried out correctly.
**B:** to channel the oenological gases and products present inside the fermentation vat so that they may distributed effectively around it.
**C:** to homogenise the temperature using a closed air-conditioning circuit. It should be pointed out that the central duct forms part of the upper tank and is permanently attached to the bottom of it.

### Lower tank:

The following elements and systems are respectively assembled on and integrated in the lower tank (3): the opening and closing valve (22) and the temperature control system.

### Opening and closing valve:

The opening and closing valve (22) is coupled to a sleeve disposed at the bottom of the lower tank (3) so that the modular fermentation vat may be filled and emptied.

### Temperature control system:

This consists of a closed air-conditioning circuit and temperature probe (15), controlled from an electrical control panel (16) with a programmable digital thermostat (17), connected to the probe (15) fitted in the upper tank (4), which records the temperature and the electric valves (18) of the closed air-conditioning circuit.

### Closed air-conditioning circuit:

Air-conditioning is provided by the coil (19) that may form part of the body of the lower tank (3), and involves the connection of electric valves (18) connected to the inlet and the outlet of the coil (15), thereby enabling the passage of a fluid that is usually hot or cold water depending on the requirements that may arise during the process.

### Assembly of accessory elements on a multiple modular fermentation vat

Once the fermentation vat has been erected the corresponding valves, probes, etc are fitted so that the fermentation and storage system may be implemented through the following phases: initial assembly, upper tank (4), intermediate tank (5) and lower tank (3).

### Intermediate tank:

The multiple modular fermentation vat (2) may comprise one or more intermediate tanks (5) situated between the upper tank (4) and the lower tank (3), the following elements and systems being respectively assembled on and integrated in them: temperature control system and the coupling of the temperature control system to the central duct.

### Temperature control system:

This consists of a closed air-conditioning circuit and temperature probe (15), controlled from an electrical control panel (16) with a programmable digital thermostat (17), connected to the probe (15) fitted in the upper tank (4), which records the temperature and the electric valves (18) of the closed air-conditioning circuit.

***Closed air-conditioning circuit:*** Air-conditioning is provided by the coil (15) that may form part of the body of the intermediate tank (5), by means of the connection of electric valves (18) to the inlet and outlet of the coil (15), thereby enabling the passage of a fluid that is usually hot or cold water depending on the requirements that may arise during the process.

Once the assembly of the modular fermentation vats (1 and 2) featuring the various accessory elements and systems that make them up has been completed the fermentation process may begin.

### Fermentation:

The grapes are deposited into the fermentation vats, which subsequently convert them into wine as a result of the following processes: ***filling, fermentation, decanting and emptying.***

### -Filling

The modular fermentation vat may be filled by gravity from the opening in the roof of the upper tank (4) or by pressure through the opening/closing valve (22) integrated in the bottom of the lower tank (3).

Filling by gravity: conducted through the opening in the roof of the upper tank (4), with the grapes falling freely into the fermentation vat.
Filling by pressure: conducted through the opening/closing valve (22) integrated in the bottom of the lower tank (3), the use of a pressure pump being required, given that as the modular fermentation vat (1-2) is filled the grapes already inside the tank must be forced out of the way to enable the new grapes to be deposited.

During this process, due to the weight of grapes on top of each other, the grapes release their juice so that in the end, and once the filling operation has been completed, two thirds of the total volume of the fermentation vat (1-2) is taken up with liquid and one third with grape skins, pulp and seeds. During this filling operation the pneumatic valves (13) remain closed.
As a consequence, the air that has accumulated between the lower part of the central duct (8) and the roof of the lower tank (3) and the roof of the intermediate tank (5), cannot be moved, with this entire space remaining full of air but not liquid (23).

### -Fermentation

At the end of the filling phase the fermentation phase begins due to the action of the bacteria that convert the sugar in the grapes and liquid solution into alcohol.

In this phase yeasts are usually added on a regular basis by the winery's technical staff in order to aid the bacterial action. Due to the bacterial action, the fermentation of the solution produces carbonic gas (24) naturally, spontaneously and continuously throughout the whole process until its completion.

Said carbonic gas (24) rises from the lower tank (3) to the upper tank (4) through the central duct (8), pushing the grape skins (25) upwards so that they accumulate in the upper tank (4), floating on top of the liquid (23).

In the case of fermentation in a multiple modular fermentation vat the carbonic gas (24) rises from the lower tank (3) to the upper tank (4) through the intermediate tank (5) and the respective central ducts (8) push the grape skins (25) upwards so that they accumulate in the upper tank (4), floating on top of the liquid (23).

As the roof of the upper tank (4) comprises an opening with a cover and a double-action valve (14), this enables the carbonic gas (24) to accumulate in the amount necessary without causing an overpressure inside the modular fermentation vat (1 and 2) and control the oxygenation of the process to prevent the oxidation of the skins (25) and the liquid (23).

However, part of this carbonic gas (24) is trapped between the walls of the central duct (8), the roof and the body of the lower tank (3), as the pneumatic valves (13) are closed. As a result, carbonic gas (24) accumulates in this area and displaces the oxygen.

When the carbonic gas (24) in said area reaches a certain pressure, it starts to escape through the central duct (8) towards the upper tank (4) bombarding the grape skins (25) floating in the liquid (23).

### -Decanting

From this point the pneumatic valves (13) may be opened, thereby releasing all the accumulated carbonic gas (24) towards the upper tank through the central duct (8).

This action creates a vacuum in the area (26) where the carbonic gas (24) accumulated, which is automatically occupied by the liquid (23), thereby causing the precipitation of the skins (25) present in the upper tank (4) to the lower tank (3) through the central duct (8).
The pneumatic valves (13) are then closed and the process of accumulation of the carbonic gas (24) is repeated. As the liquid (23) cannot compress the carbonic gas (24) it displaces it downwards until it is level with the lower part of the central duct (8). The skins (25) thus return to the upper tank (4) and the cycle is repeated until the fermentation phase ends.

The advantage of these successive decanting phases is that they remove the oenological characteristics present in the skins (25), making use of the energy of the accumulated carbonic gas (24) in an effective and simple way.

The seeds (27) contained in the grapes come away during decanting and fall to the bottom of the lower tank (3). If necessary, they may be removed through the opening/closing valve (22) at the bottom of the tank.

### - Decanting in a multiple modular fermentation vat

While it has the same uses and characteristics as the basic modular fermentation vat (1), it does have the specific feature of being formed by more than two tanks and thus having a minimum of two central ducts (8), as a result of which when the pneumatic valves (13) are closed the amount of carbonic gas (24) trapped between them, the body and the roof of the tanks (3, 4 and 5) is greater as, instead of accumulating carbonic gas (24) in a specific area, it is created in at least two different areas, thus accelerating the decanting phase considerably. This is especially advantageous for large fermentation vats as it reduces the fermentation process considerably.

### -Emptying

Once the fermentation phase has been completed, the opening/closing valve (22) at the bottom of the lower tank (3) is opened to empty all the liquid (23) and the skins (25) present inside the modular fermentation vat (1 and 2).

### Storing wine:

It is also possible to store wine inside the modular fermentation vat (1-2). This simply involves opening the pneumatic valves (18) so that the accumulation of air described in the fermentation phase does not occur, which thus enables the liquid (23) to flood both the tanks completely.

## Claims

1. Fermentation and storage system **characterised in that** it is implemented in a basic modular fermentation vat comprised of two tanks and/or in a multiple fermentation vat comprised of three or more tanks, with, in both cases, said tanks being connected together by their assembly using interconnecting elements.

2. Fermentation and storage system according to the preceding claim, wherein, in the case of the basic modular fermentation vat, the first stage involves its assembly, with the lower tank (3) being fixed, its bottom being supported on a base on the ground or, if it has feet built into it, it being supported on these, the upper tank (4) then being coupled by means of a lifting tool (6), inserted through the upper opening in the roof, and at the same time stops (7) are perimetrally disposed on the central duct (8) of the upper tank (4).

3. Fermentation and storage system according to claim 1, **wherein**, in the case of the multiple modular fermentation vat, the first stage involves its assembly, with it then being fixed to the lower tank (3), its bottom being supported on a base on the ground or, if it has feet built into it, it being supported on these, one or more intermediate tanks (5) then being coupled, the procedure being completed with the coupling of the upper tank (4), all by means of a tool (6), inserted through the upper opening in the roof, and at the same time stops (7) are perimetrally disposed on the central ducts (8) of the upper tank (4) and the intermediate tank (5).

4. Fermentation and storage system according to claim 1, **wherein**, in the case of the basic modular fermentation vat, it continues with the assembly of valves, probes, etc so that the aforementioned system may be implemented through the following phases: *initial assembly, upper tank and lower tank.*

5. Fermentation and storage system according to claim 1, **wherein**, in the case of the multiple modular fermentation vat, it continues with the assembly of valves, probes, etc so that the aforementioned system may be implemented through the following phases: *initial assembly, upper tank, intermediate tank and lower tank.*

6. Fermentation and storage system according to claim 4, **wherein** in the initial assembly phase the lower tank (3) and the upper tank (4) are connected to the central duct (8) by means of coupling the pneumatic valves (13) fitted on the corresponding sleeves disposed on them.

7. Fermentation and storage system according to claim 5, **wherein** in the initial assembly phase the lower tank (3), with one or more intermediate tanks (5), and the upper tank (4) are connected to the central duct (8) of the upper tank (4) and the intermediate tank (5) by means of coupling the pneumatic valves (13) fitted on the corresponding sleeves disposed on them.

8. Fermentation and storage system according to claims 4 and 5, **wherein** in *the phase of the assembly of the accessory elements on the upper tank (4)* the following elements and systems are built in: *double-action valve (14), temperature control system and coupling of the temperature control system to the central duct (8).*

9. Fermentation and storage system according to claim 8, **wherein** the upper tank (4) is provided with a central opening with a hermetic seal cover that prevents direct contact between the grapes and the must and the oxygen in the surrounding atmosphere, thereby preventing the phenomenon of oxidation, with it being capable of being opened to enable the visual inspection and control of the fermentation process, and also to introduce manually additional elements during the process, a double-action pressure/vacuum valve (14) being incorporated alongside it, it being threaded on a sleeve in order to control oxygenation.

10. Fermentation and storage system according to claim 8, **wherein** the phase of *coupling the temperature control system to the central duct* (8) may be disposed with a closed air-conditioning circuit similar to the one described for the body of the upper tank (4) through the coil (20) that may form part of it, by means of the connection of electric valves (18) to its inlet and outlet, thereby enabling the passage of a fluid that is usually hot or cold water depending on the requirements that may arise during the process.

11. Fermentation and storage system according to claim 10, **wherein** by coupling the closed air-conditioning circuit to the central duct (8) both temperatures may be homogenised, which is recommended to create uniform fermentation, with the main duct having the following functions:
A: to act as a stabilising element during and after the assembly of the two tanks (upper + lower). To achieve this, the dimensions of this central duct depend on the total volume of the modular fermentation vat as these dimensions are crucial to this first function being carried out correctly.
B: to channel the oenological gases and products present inside the fermentation vat so that they may be distributed effectively around it.
C: to homogenise the temperature using a closed air-conditioning circuit. It should be pointed out that the central duct forms part of the upper tank and is permanently attached to the bottom of it.

12. Fermentation and storage system according to claims 4 and 5, **wherein** in the *phase of the assembly of the accessory elements on the lower tank (3)* the following elements and systems are built in: *opening and closing valve (22) and temperature control system.*

13. Fermentation and storage system according to claim 5, **wherein** in the *phase of the assembly of accessory elements on the intermediate tank (5)* the following elements and systems are integrated: *temperature control system and coupling of the temperature control system to the central duct.*

14. Fermentation and storage system according to claim 1, **wherein** the fermentation process begins when the grapes are deposited into the modular fermentation vats, which subsequently convert them into wine as a result of the following processes: ***filling, fermentation, decanting and emptying.***

15. Fermentation and storage system according to claim 14, **wherein** the filling-by-gravity phase is conducted through the opening in the roof of the upper tank (4), with the grapes falling freely into the fermentation vat, while the filling-by-pressure phase is conducted through the opening/closing valve (22), the use of a pump being required, given that as the modular fermentation vat (1-2) is filled, the grapes already inside the tank must be forced out of the way to enable the new grapes to be deposited.

16. Fermentation and storage system according to claims 14 and 15, **wherein** in the grape-filling phase, due to the weight of grapes on top of each other, the grapes release their juice so that in the end, and once the filling operation has been completed, two thirds of the total volume of the fermentation vat (1-2) is taken up with liquid and one third with grape skins, pulp and seeds, the pneumatic valves (13) remaining closed during the filling operation.

17. Fermentation and storage system according to claims 14, 15 and 16, **wherein** as the pneumatic valves (13) remain closed during the filling operation, the air that has accumulated between the lower part of the central duct (8) and the roof of the lower tank (3) and the roof of the intermediate tank (5), cannot be moved, with this entire space (26) remaining full of air but not liquid (23).

18. Fermentation and storage system according to claim 14, **wherein** in the case of fermentation in a multiple modular fermentation vat (2) the carbonic gas (24) rises from the lower tank (3) to the upper tank (4) through the intermediate tank (5) and the respective central ducts (8), pushing the grape skins (25) upwards so that they accumulate in the upper tank (4), floating on top of the liquid (23).

19. Fermentation and storage system according to claim 14, **wherein** in the *decanting* phase the pneumatic valves (13) may be opened, thereby releasing all the accumulated carbonic gas (24) towards the upper tank through the central duct (8), thus creating a vacuum in the area (26) where the carbonic gas (24) accumulated, which is automatically occupied by the liquid (23), thereby causing the precipitation of the skins (25) present in the upper tank (4) to the lower tank (3) through the central duct (8).

20. Fermentation and storage system according to claim 19, **wherein** the *decanting* phase in a multiple modular fermentation vat (2), as it comprises more than two tanks, is disposed with a minimum of two central ducts (8), one in the upper tank (4) and the other in the intermediate tank (5), as a result of which when the pneumatic valves (13) are closed the amount of carbonic gas (24) trapped between them, the body and the roof of the tanks (3, 4 and 5) is greater as, instead of accumulating carbonic gas (24) in a specific area, it is created in at least two different areas, thus accelerating the decanting phase considerably.

21. Fermentation and storage system according to claim 14, **wherein** in the *emptying* phase the opening/closing valve (22) at the bottom of the lower tank (3) is opened to empty all the liquid (23) and the skins (25) present inside the modular fermentation vat (1 and 2).

22. Fermentation and storage system according to claim 1, **wherein** the storage of wine inside the modular fermentation vat (1-2), simply involves opening the pneumatic valves (13) so that the accumulation of air inside the fermentation phase does not occur, which thus enables the liquid (23) to flood the tanks completely.
